# EUROPEAN PATENT APPLICATION

(11) **EP 4 624 268 A1**
(43) Date of publication of application: **01.10.2025**
(21) Application number: 25158496.7
(22) Date of filing: 18.02.2025
(51) Int. Cl.: B60R 16/03, B60R 16/033, B60K 1/00, B60K 6/00, B60L 1/00, B60K 6/40, B60L 15/00, B60K 6/26

(54) **VEHICLE AND VEHICLE POWERTRAIN STRUCTURE**

(30) Priority: 28.03.2024 JP 2024054355
(71) Applicant: MAZDA MOTOR CORPORATION, Hiroshima 730-8670 (JP)
(72) Inventor: Sugimoto, Manabu, Aki-gun, Hiroshima, 730-8670 (JP); Ikeda, Erika, Aki-gun, Hiroshima, 730-8670 (JP); Tsukishita, Yuki, Aki-gun, Hiroshima, 730-8670 (JP); Uchise, Hideaki, Aki-gun, Hiroshima, 730-8670 (JP)
(74) Representative: Thoma, Michael

(57) **Abstract**

[Problem] To provide a vehicle powertrain structure capable of ensuring safety during a vehicle collision.

[Solution] A vehicle includes a drive system having a motor M and a motor housing, a battery, and an inverter that converts electric power between the motor M and the battery. An inverter housing of the inverter is closely joined to a motor housing, and a DC connector CN1, to which a wire extending from the battery is connected, is disposed in a rear wall portion of the motor housing. A DC bus bar LN2 connecting between the DC connector CN1 and a circuit section of the inverter is routed in the motor housing.

## Description

### [Technical Field]

The present invention relates to a vehicle and a vehicle powertrain structure and, in particular, to a powertrain structure that includes a travel motor and a power converter.

### [Background Art]

In recent years, vehicles that include a motor as a drive source for travel have been increasing. A battery for supplying electric power to the motor is mounted on such vehicles. In Patent Literature 1, a vehicle drive system that includes the motor as the drive source for travel is disclosed.

The vehicle drive system disclosed in Patent Literature 1 includes: the motor as the drive source for travel; a transmission mechanism connected to the motor; and a drive system case that accommodates the motor and the transmission mechanism. The drive system case has a tank-shaped portion that is formed by recessing a part of an outer wall inward in a rectangular parallelepiped shape at a position adjacent to a portion of the drive system case in which the motor is accommodated. The tank-shaped portion is isolated from a portion in which the motor, the transmission mechanism, and the like are accommodated.

The vehicle drive system also includes an inverter device that is interposed between the battery and the motor and has an element unit and a capacitor unit. The inverter device also has an inverter case that constitutes an outer shell, and the element unit and the capacitor unit are accommodated in the inverter case. In the vehicle drive system, a part (a portion in which the capacitor unit is accommodated) of the inverter case is accommodated in the tank-shaped portion provided to the drive system case. In regard to the vehicle drive system disclosed in Patent Literature 1, the part of the inverter case is accommodated in the tank-shaped portion, thereby downsizing the vehicle drive system.

### [Citation List]

### [Patent Literature]

[Patent Literature 1] JP2014-113915A

### [Summary of Invention]

### [Technical Problem]

However, in the prior art that includes the technique disclosed in Patent Literature 1, it is considered to be difficult to ensure safety during a vehicle collision. More specifically, although a DC wire that connects the inverter device and the battery is not disclosed in Patent Literature 1, a connector, to which the DC wire is connected, is provided to the inverter case. Accordingly, in regard to the vehicle drive system disclosed in Patent Literature 1, it is considered that the DC wire connecting the inverter device and the battery is routed on the outside of the drive system case. Thus, there is a concern that the DC wire is damaged, depending on relative displacement between the drive system and a vehicle body or a peripheral member during the vehicle collision, and it is required to establish a measure for securing a space, which allows the relative displacement during the vehicle collision, around the DC wire.

The invention has been made to solve the problem as described above and therefore has a purpose of providing a vehicle and a vehicle powertrain structure capable of ensuring safety during a vehicle collision.

### [Solution to Problem]

A vehicle powertrain structure according to the present invention includes: a drive system for mounting on a vehicle and has a motor as a drive source for travel of the vehicle and a drive system housing at least accommodating the motor; a battery as a power source of the motor; and a power converter that is to be mounted on the vehicle and has a circuit section for power conversion between the motor and the battery and a converter housing accommodating the circuit section. In the vehicle powertrain structure, the converter housing is closely and/or directly joined to the drive system housing or integrally provided with the drive system housing, a power supply connection portion, to which a wire extending from the battery is connected, is disposed in or on a peripheral wall portion of the drive system housing, and a conductive member that connects between the power supply connection portion and the circuit section is disposed in the drive system housing.

In the vehicle powertrain structure according to the present invention , since the conductive member that connects between the power supply connection portion and the circuit section is routed in the drive system housing, the conductive member is protected by the drive system housing even during a vehicle collision. Thus, damage to a conductive wire is suppressed even during the vehicle collision.

In the above description, "closely joined" indicates that, even in the case where a minute clearance is provided in a joined portion between the drive system housing and the converter housing, an electromagnetic wave does not enter/exit through the clearance.

In addition, "power conversion" that is executed by the circuit section of the power converter indicates that at least one variable such as a voltage, a current, a frequency, a phase, or the number of the phases as a variable of electric power is converted into another form. For example, "power conversion" indicates conversion between DC power and AC power, conversion to increase/reduce the voltage, or the like.

In the vehicle powertrain structure according to an aspect, the converter housing may separately be provided from the drive system housing, each of the drive system housing and the converter housing may be formed by using a conductive material, and the circuit section may have a circuit wire that extends from a connection portion with the conductive member and may have a noise filter component that is inserted in the circuit wire.

In the vehicle powertrain structure according to an aspect, since the noise filter component is inserted in the circuit wire, it is possible to prevent leakage of noise generated in the power converter to a wire on the power supply connection portion side from a portion of the circuit wire, in which the noise filter component is inserted, and on the battery side from the power supply connection portion (an electromagnetic interference (EMI) measure). In addition, also in the case where noise from another device is transmitted to the wire from the battery to the power supply connection portion, interference of the noise with driving of the power converter is prevented (an electromagnetic susceptibility (EMS) measure).

In the vehicle powertrain structure according to an aspect, each of the drive system housing and the converter housing is made of the conductive material, and the circuit wire and the conductive member are accommodated therein. Thus, it is possible to prevent the leakage of the noise to the outside of the converter housing from a portion on an opposite side of the power supply connection portion from the portion of the circuit wire, in which the noise filter component is inserted, and the entry of the noise from the outside of the drive system housing or the converter housing into the drive system housing or the converter housing. In this way, an electromagnetic compatibility (EMS) measure is established.

In the vehicle powertrain structure according to an aspect, the converter housing may be placed on the drive system housing and may have a downward protruding portion that is formed to protrude toward the drive system housing located below, the drive system housing may have a recessed portion that the downward protruding portion enters, the circuit wire in the circuit section may be accommodated in the downward protruding portion, and the conductive member may be formed to extend downward from the recessed portion.

The motor has a stator and a rotor in circular shapes when seen in an axial direction of a rotational shaft. For this reason, an accommodation region of the motor in the drive system housing is a columnar region. In the vehicle powertrain structure according to an aspect, in view of the shape of the accommodation region of the motor as described above in the drive system housing, it is configured that the recessed portion is provided in the portion that does not interfere with the accommodation region of the motor and that the downward protruding portion of the converter housing enters the recessed portion. In this way, in the vehicle powertrain structure according to an aspect, it is possible to suppress enlargement of the drive system housing and the converter housing and to thereby suppress damage to the powertrain and peripheral portions thereof during the vehicle collision. In addition, by suppressing the enlargement of the drive system housing and the converter housing, it is possible to secure a high degree of freedom in design of the vehicle.

In the vehicle powertrain structure according to an aspect, a differential gear may be accommodated in the drive system housing, the differential gear being connected to an output shaft that transmits a driving force for travel to wheels, and the conductive member has an arcuate portion that is provided to surround a periphery of the differential gear.

In the vehicle powertrain structure according to an aspect, since the conductive member has the arcuate portion, it is possible to suppress the clearance between the conductive member and the differential gear as small as possible while avoiding the interference between the conductive member and each of the differential gear and the peripheral wall portion. Accordingly, in vehicle powertrain structure according to an aspect, it is possible to suppress the enlargement of the drive system housing and to secure the high degree of freedom in the design while suppressing the damage to the drive system housing and the peripheral portion during the vehicle collision.

In the vehicle powertrain structure according to an aspect, the noise filter component may at least include a ferrite core in a tubular shape, or in other words in a donut shape, and in a state where a tube axis is along an up-down direction, the ferrite core may be accommodated in the downward protruding portion.

When a function of the ferrite core as a noise filter is concerned, the ferrite core desirably has a shape that has a small inner diameter, is thick, and is long in a tube axis direction. In the vehicle powertrain structure according to an aspect, it is possible to prevent the converter housing from being elongated in a vehicle front-rear direction and a vehicle width direction while the function of the ferrite core as the noise filter as described above is concerned. That is, when the tube axis of the ferrite core is arranged in the up-down direction, it is possible to suppress the portion of the converter housing, in which the ferrite core is accommodated, from bulging in the front-rear direction and the vehicle width direction. In this way, in the plan view of the converter housing and the drive system housing, it is possible to prevent the converter housing from protruding from an outer shape line of the drive system housing. Thus, even during the vehicle collision, it is possible to suppress damage to the circuit wire inserted through the tube of the ferrite core, which is advantageous to ensure high safety.

In the vehicle powertrain structure according to an aspect, the circuit wire may have: an inserted portion that is inserted through a tube of the ferrite core; and an extending portion that is connected to the inserted portion and extends in an opposite direction from a connection portion with the conductive member with the ferrite core being interposed therebetween, and the inserted portion and the extending portion may be connected to each other at a position above the ferrite core.

In the vehicle powertrain structure according to an aspect, the connection portion between the inserted portion and the extending portion in the circuit wire is arranged above the ferrite core. Accordingly, compared to a case where the connection portion between the inserted portion and the extending portion in the circuit wire is arranged at a position (on the outside) shifted from the position above the ferrite core, in the vehicle powertrain structure according to an aspect, it is possible to suppress the enlargement of the converter housing in the vehicle front-rear direction and the vehicle width direction. Thus, it is possible to suppress the portion of the converter housing, in which the ferrite core is accommodated, from bulging in the front-rear direction and the vehicle width direction, and it is thus possible to suppress the damage to the converter housing during the vehicle collision.

In the vehicle powertrain structure according to an aspect, the drive system and the power converter may be mounted in a front portion of the vehicle, and the power supply connection portion may be disposed in a rear wall portion, which is disposed behind the motor, in the drive system housing.

In the vehicle powertrain structure according to an aspect, the drive system and the power converter are mounted in the front portion of the vehicle, and the power supply connection portion is disposed in the rear wall portion of the drive system housing. Accordingly, in the vehicle powertrain structure according to an aspect, even in the case where a frontal collision of the vehicle occurs, and an obstacle enters the portion, in which the drive system and the power converter are arranged, in the front portion of the vehicle, it is possible to suppress the damage to the power supply connection portion, which is caused by the obstacle or a member, which is pushed by the obstacle and moves rearward, in the vehicle, or the like. That is, the drive system housing, which accommodates the motor, has relatively high rigidity, and thus functions as a protection member that protects the power supply connection portion during the frontal collision.

In the vehicle powertrain structure according to an aspect, an auxiliary machine that is actuated by power from the battery may be mounted on the vehicle, and in the drive system housing, an auxiliary machine wire that is branched from the conductive member and connects between the power supply connection portion and the auxiliary machine may be accommodated.

In the vehicle powertrain structure according to an aspect, the auxiliary machine wire, which is branched from the conductive member, is accommodated in the drive system housing. Thus, the auxiliary machine wire is also protected during the vehicle collision. Accordingly, such a structure is advantageous to ensure the high safety during the vehicle collision while allowing the power supply to the auxiliary machine by the auxiliary machine wire, which is branched from the conductive member.

### [Advantageous Effects of Invention]

The vehicle powertrain structure according to each of the above aspects can ensure the safety during the vehicle collision.

### [Brief Description of Drawings]

[FIG. 1] FIG. 1 is a view illustrating a schematic configuration of a vehicle on which a powertrain is mounted.
[FIG. 2] FIG. 2 is a view illustrating a power supply path between a battery and a motor.
[FIG. 3] FIG. 3 is a back view in which the powertrain is seen from behind.
[FIG. 4] FIG. 4 is a right view illustrating a part of a motor housing and an inverter.
[FIG. 5] FIG. 5 is a plan view in which the inverter is seen from above.
[FIG. 6] FIG. 6 is a cross-sectional view illustrating a configuration of a DC input/output unit in the inverter.
[FIG. 7] FIG. 7 is a perspective view illustrating a routing structure of a DC bus bar in the motor housing.
[FIG. 8] FIG. 8 includes views illustrating the routing structure of the DC bus bar in the motor housing, in which FIG. 8A is a right view and FIG. 8B is a front view.

### [Description of Embodiments]

A description will hereinafter be made on an embodiment of the present invention with reference to the drawings.

In the drawings used in the following description, "FR" indicates a vehicle front direction, "RR" indicates a vehicle rear direction, "LH" indicates a vehicle left direction, "RH" indicates a vehicle right direction, "UP" indicates a vehicle up direction, and "LO" indicates a vehicle down direction.

### 1. Configuration of Vehicle V

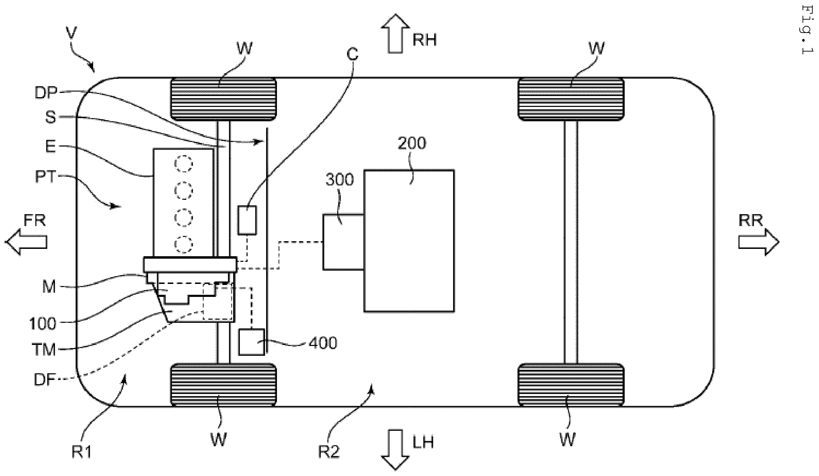

A description will be made on a configuration of a vehicle V according to an embodiment of the invention with reference to FIG. 1.

As illustrated in FIG. 1, in the vehicle V, a powertrain PT that includes an inverter (power converter) 100 is mounted in a front powertrain room R1.

The vehicle V is a so-called hybrid electric vehicle (HEV). An engine E and a motor M as drive sources for travel (that is, drive sources for wheels W) are mounted on the vehicle V. That is, in the vehicle V, the engine E and the motor M constitute a drive system. The powertrain PT includes a transmission TM in addition to the engine E and the motor M.

The motor M that constitutes the drive system is a three-phase three-wire AC motor that is rotated when being supplied with three-phase AC power, and includes: a rotational shaft; a rotor that has a permanent magnet disposed around the rotational shaft; and a stator that is disposed on an outer periphery of the rotor and in which a coil is wound around each of plural teeth. The plural coils include a U-phase coil, a V-phase coil, and a W-phase coil, and currents in mutually different phases are supplied to the coils of the respective phases.

The transmission TM is connected to the motor M and decelerates the rotation that is input from the motor M. The transmission TM is integrated with a differential FIADF. Thus, the rotation that is input to the transmission TM is output to a driveshaft S via a differential gear DF and is transmitted to the wheels W.

The vehicle V according to an embodiment may be a parallel hybrid electric vehicle as an example, and can travel by using only a driving force of the motor M, can travel by using the driving forces of both of the motor M and the engine E, and can travel by using only the driving force of the engine E. The vehicle V can perform deceleration regeneration, and the motor M generates the electric power by using a transmission force from the wheels W during deceleration of the vehicle V.

A battery 200 is mounted behind the powertrain PT, more specifically, under a floor of a cabin R2. The battery 200 exchanges the electric power with the motor M. When the motor M is driven as the drive source for travel, the battery 200 supplies the electric power to the motor M. In this case, DC power is supplied via a DC/DC converter 300 that is provided in a power supply path between the battery 200 and the motor M.

Meanwhile, when the motor M is driven as a generator during the deceleration of the vehicle V, the battery 200 stores the electric power that is generated by the motor M.

The inverter 100 is connected to the three-phase three-wire motor M. The inverter 100 is a power converter that converts the DC power from the battery 200 into AC power and supplies the AC power to the motor M. More specifically, the inverter 100 converts the DC power, which is supplied from the battery 200 via a DC circuit including the DC/DC converter 300, into the three-phase AC power and supplies the three-phase AC power to the motor M.

In the case where the motor M is driven as the generator during the deceleration of the vehicle V, the inverter 100 converts the AC power, which is generated by the motor M, into the DC power and supplies the DC power to the battery 200 via the DC circuit including the DC/DC converter 300.

Although not illustrated in FIG. 1, the vehicle V also includes a low-voltage battery for supplying the electric power to an electrical component provided in each portion of the vehicle V. The low-voltage battery is a battery, a nominal voltage of which is lower than that of the battery 200.

Here, the battery 200 is a lithium-ion battery or a nickel-metal hydride battery, a nominal voltage of which is 24 V or higher, for example. The low-voltage battery is a lead battery or a lithium-ion battery, a nominal voltage of which is 12 V or 24 V, for example.

A powertrain control module (PCM) 400 is also mounted on the vehicle V, and the PCM 400 is a controller that comprehensively controls the powertrain PT including the motor M and the engine E.

An electric compressor (auxiliary machine) C for an air conditioner is also mounted in the powertrain room R1 of the vehicle V. The electric compressor C is driven when being supplied with the DC power from the battery 200.

### 2. Electrical Connection Among Battery 200, Powertrain PT, and Electric compressor C

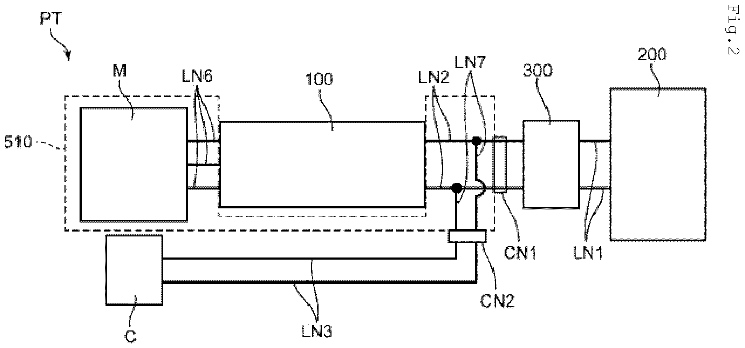

A description will be made on electrical connection among the battery 200, the powertrain PT, and the electric compressor C with reference to FIG. 2.

As illustrated in FIG. 2, the battery 200 is connected to the powertrain PT via the DC/DC converter 300. The powertrain PT has the motor M. The motor M is connected to the inverter 100 by an AC bus bar LN6. The inverter 100 is connected to the battery 200 via the DC/DC converter 300 by a power line harness LN1.

A DC connector (power supply connection portion) CN1 is disposed in a peripheral wall portion of a motor housing (drive system housing 510) that accommodates the motor M. The power line harness LN1 is connected to the DC connector CN1. A DC bus bar (conductive member) LN2 that is connected to the DC connector CN1 is routed in the motor housing 510. The DC bus bar LN2 connects the DC connector CN1 and the inverter 100.

A DC connector CN2 is also disposed in the peripheral wall portion of the motor housing 510. An auxiliary machine wire harness LN3 that is connected to the electric compressor C is connected to the DC connector CN2.

In the motor housing 510, a DC wire (DC bus bar) LN7, which is branched from the DC bus bar LN2, is connected to the DC connector CN2.

The DC power from the battery 200 is supplied to the inverter 100 via the DC/DC converter 300, is then converted into the AC power, and is supplied to the motor M. During deceleration of the vehicle V, the AC power, which is generated by the motor M, is converted into the DC power by the inverter 100 and supplied to the battery 200 via the DC/DC converter 300.

Meanwhile, the electric compressor C is supplied with the DC power, which is supplied from the battery 200 via the DC/DC converter 300, through the DC bus bar LN7 and the auxiliary machine wire harness LN3.

### 3. Arrangement of Each Portion in Powertrain PT

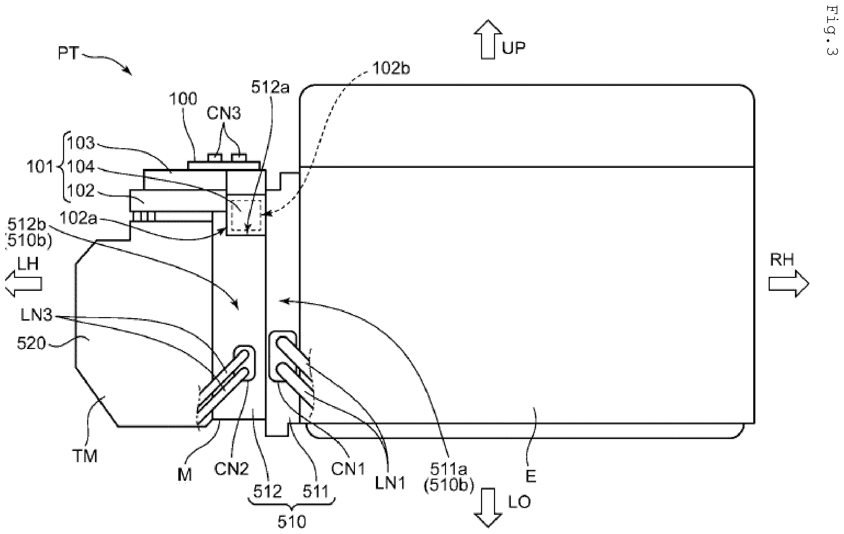

A description will be made on arrangement of each portion in the powertrain PT with reference to FIG. 3. FIG. 3 is a back view in which the powertrain PT is seen from the rear side of the vehicle V.

As illustrated in FIG. 3, the engine E, the motor M, and the transmission TM are sequentially arranged from right to left in the powertrain room R1. The engine E is, for example, a multi-cylinder reciprocating engine.

The motor M is disposed on a left side adjacent to a lower portion (cylinder block) of the engine E, and is accommodated in the motor housing (drive system housing) 510 that includes a first motor housing 511 and a second motor housing 512. The first motor housing 511 and the second motor housing 512 each have a dish shape (a shallow dish shape or a deep dish shape), and are joined to each other in a state where opening edges thereof abut each other.

Here, although the motor M that is accommodated in the motor housing 510 is not illustrated in FIG. 3, the rotational shaft of the motor M is arranged to extend along a vehicle width direction.

Each of the first motor housing 511 and the second motor housing 512 is formed by using a conductive material (for example, a metallic material or a carbon fiber reinforced resin).

The DC connector CN1, to which the power line harness LN1 is connected, is disposed in a rear wall portion 511a of the first motor housing 511. The DC connector CN2, to which the auxiliary machine wire harness LN3 is connected, is disposed in a rear wall portion 512b of the second motor housing 512. That is, the DC connectors CN1, CN2 are disposed in a rear wall portion 510b that is a part of the peripheral wall portion of the motor housing 510.

A recessed portion 512a that is recessed downward is provided in an upper rear portion of the second motor housing 512 in the motor housing 510. The recessed portion 512a is formed in a shape and a size that do not interfere with the motor M accommodated therein.

The transmission TM has an axle housing 520 as an outer shell. The axle housing 520 is joined (fastened) to a left portion of the second motor housing 512 in the motor housing 510 without a clearance therebetween. A transmission mechanism that constitutes the transmission TM and a gear mechanism that constitutes the differential gear DF are accommodated in the axle housing 520. The axle housing 520 is formed by using the conductive material (for example, the metallic material or the carbon fiber reinforced resin).

In the vehicle width direction of the vehicle V, the inverter 100 is arranged in a portion extending from an upper portion of the second motor housing 512 to an upper portion of the axle housing 520.

The inverter 100 has an inverter housing (converter housing) 101 that constitutes an outer shell. The inverter housing 101 is configured by combining a housing body portion 102, a lid 103, and a cover 104. The housing body portion 102 has an opening in an upper portion thereof, and has a downward protruding portion 102a that enters the recessed portion 512a of the second motor housing 512. An opening 102b that is opened rearward (a front side of the sheet of FIG. 3) is provided to the downward protruding portion 102a of the housing body portion 102. The opening 102b is a so-called service hole, and is a portion, from which a tool is inserted when work such as electrical connection is performed. The opening 102b is closed by the cover 104.

The lid 103 closes the opening of the housing body portion 102. The lid 103 is provided with plural (two as an example in an embodiment) PCM connectors CN3 in a manner to protrude upward. The PCM connectors CN3 are connectors for connecting the PCM 400 to the inverter 100.

Each of the housing body portion 102, the lid 103, and the cover 104 is formed by using the conductive material (for example, the metallic material or the carbon fiber reinforced resin).

### 4. Structure and Arrangement of Inverter 100

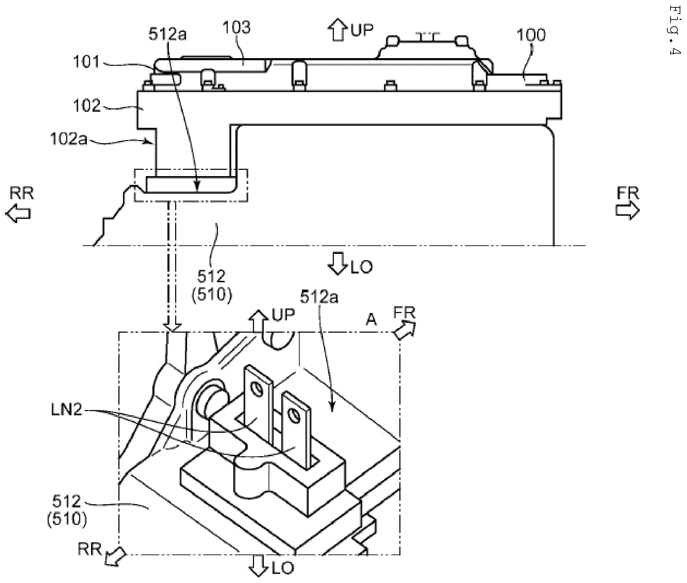

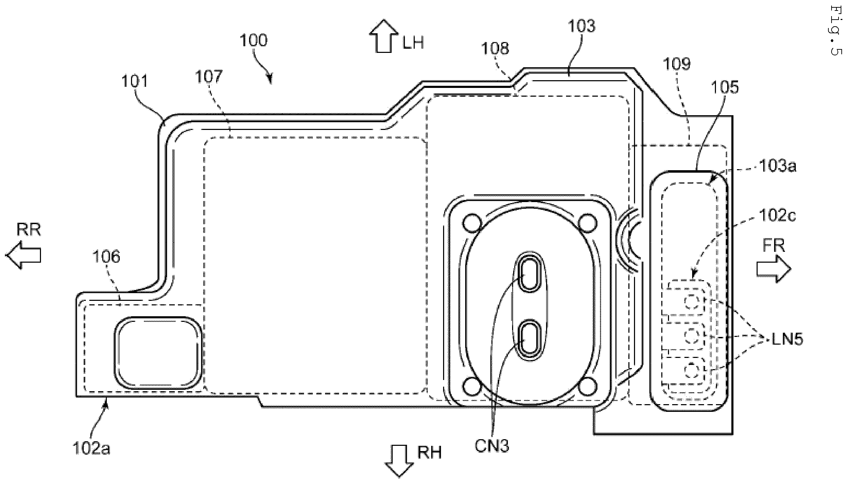

A description will be made on a structure and arrangement of the inverter 100 with reference to FIG. 4 and FIG. 5.

As illustrated in FIG. 4, in the front-rear direction of the vehicle V, the inverter housing 101 of the inverter 100 is arranged such that a rear end thereof is located in front of a rear end of the motor housing 510. Although the first motor housing 511 is not illustrated in FIG. 4, the rear end of the inverter housing 101 is arranged in front of a rear end of the first motor housing 511. In addition, a front end of the inverter housing 101 is flush with a front end of the first motor housing 511 or is arranged behind a front end of the first motor housing 511.

As described above, the housing body portion 102 of the inverter housing 101 has, in a rear end portion, the downward protruding portion 102a that protrudes downward. The downward protruding portion 102a enters the recessed portion 512a of the second motor housing 512, and a lower surface of the downward protruding portion 102a is joined to an upper surface of the recessed portion 512a. As illustrated in section A of FIG. 4, the DC bus bar LN2 protrudes upward from an opening that is provided in the recessed portion 512a of the second motor housing 512. The DC bus bar LN2 is joined to the DC wire in the inverter 100. Then, the opening 102b is used at the time of fastening.

As illustrated in FIG. 5, the inverter 100 includes, in the inverter housing 101, a DC input/output unit 106, a smoothing unit 107, a power module unit 108, and an AC input/output unit 109 that are sequentially arranged in a direction from the rear end side toward the front end side. A portion (downward protruding portion 102a) of the inverter housing 101, in which the DC input/output unit 106 is accommodated, is formed to have a narrower width in the vehicle width direction than the other portions, and is arranged at a position shifted to the right side. That is, the downward protruding portion 102a, in which the DC input/output unit 106 is accommodated, is arranged to be shifted inward in the vehicle width direction from the other portions of the inverter housing 101.

The smoothing unit 107 is configured to include a smoothing capacitor such as a film capacitor or an electrolytic capacitor. An X capacitor may be disposed in the smoothing unit 107.

The power module unit 108 is configured by an insulated gate bipolar transistor (IGBT). However, the power module unit 108 does not always have to be configured by the IGBT, and may be configured by a known power module such as a metal oxide semiconductor field effect transistor (MOSFET).

The AC input/output unit 109 includes an AC bus bar LN5 for connection with the motor M. The AC bus bar LN5 is connected to the AC bus bar LN6 (see FIG. 2) that extends from the motor M through an opening 102c provided to a bottom wall of the housing body portion 102 in the inverter housing 101.

Here, an opening 103a is provided to a portion of the lid 103 above the AC input/output unit 109. The opening 103a is a so-called service hole, and is a portion, from which the tool is inserted when connection work between the AC bus bar LN5 and the AC bus bar LN6 is performed. The opening 103a is closed by a cover 105 that is formed of the conductive material (for example, the metallic material or the carbon fiber reinforced resin).

Although a detailed description is not made, the inverter housing 101 is also provided with a refrigerant circulation path for cooling the smoothing unit 107 and the power module unit 108.

### 5. Configuration of DC Input/Output Unit 106 in Inverter 100

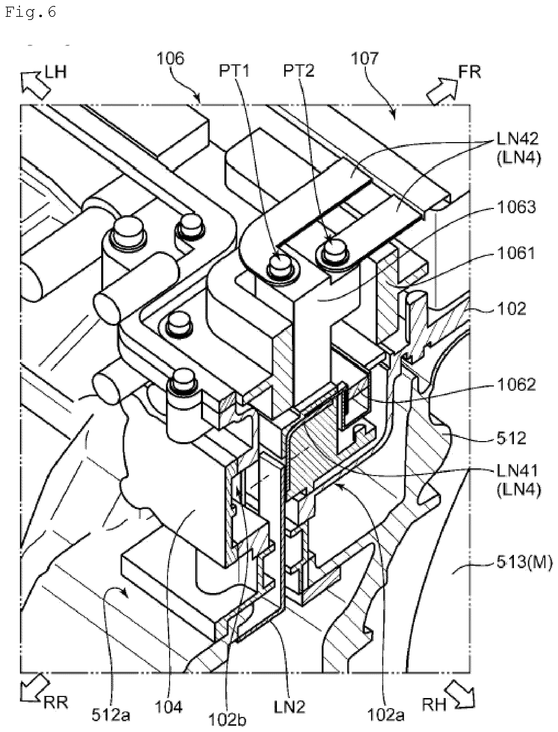

A description will be made on a configuration of the DC input/output unit 106 in the inverter 100 with reference to FIG. 6.

As illustrated in FIG. 6, the DC input/output unit 106 includes: a ferrite core 1061 and a Y capacitor 1062 as noise filter components; a DC bus bar (circuit wire) LN4; and a resin mold 1063, and is accommodated in the downward protruding portion 102a of the inverter housing 101.

The ferrite core 1061 is a member that has a square tube shape, is arranged in a state where a tube axis is along the up-down direction, and is fixed to the housing body portion 102 by a peripheral flange portion. A lower end of the ferrite core 1061 is located at the same position as or higher than an upper edge of the opening 102b that is provided in the rear portion of the downward protruding portion 102a.

The DC bus bar LN4 is configured to include: an inserted portion LN41 that is inserted through a tube of the ferrite core 1061; and an extending portion LN42 that is connected to the inserted portion LN41 and extends from a position above the ferrite core 1061 toward the smoothing unit 107. In an embodiment, connection points PT1, PT2 between the inserted portion LN41 and the extending portion LN42 are arranged above the ferrite core 1061. In detail, when the connection points PT1, PT2 are seen from above in a plan view, the connection points PT1, PT2 are each arranged at an overlapping position with a tube hole of the ferrite core 1061.

In a pair of the positive and negative inserted portions LN41, portions, each of which passes through the tube of the ferrite core 1061, is coated with the resin mold 1063 having an electric insulation property. In this way, it is possible to reduce time and effort required for handling of the components at the time of manufacturing the inverter 100.

One end of the Y capacitor 1062 is connected to a portion that is lower than the portion covered with the resin mold 1063 in the inserted portion LN41 of the DC bus bar LN4. FIG. 6 illustrates only one of the paired inserted portions LN41, and thus illustrates only one of the Y capacitors 1062. However, the Y capacitors 1062 are respectively connected to the paired inserted portions LN41. The other end of the Y capacitor 1062 is connected to the ground (grounded). In an embodiment, the other end of the Y capacitor 1062 is connected (grounded) to the conductive housing body portion 102.

As illustrated in section A of FIG. 4, the DC bus bars LN2 protrude upward from the recessed portion 512a of the second motor housing 512. The DC bus bars LN2 are each provided such that a tip thereof overlaps a portion on a tip side from the portion of the inserted portion LN41, to which the Y capacitor 1062 is connected, in the downward protruding portion 102a of the housing body portion 102. The inserted portion LN41 of the DC bus bar LN4 and the DC bus bar LN2 are connected to each other by using a tool that is inserted through the opening 102b provided in the downward protruding portion 102a. Then, after the inserted portion LN41 of the DC bus bar LN4 is connected to the DC bus bar LN2, the opening 102b is closed by the cover 104.

Here, the downward protruding portion 102a of the inverter housing 101 and the DC bus bar LN2 are arranged so as not to interfere with the portion of the motor housing 510, in which a stator 513 and the rotor of the motor M are accommodated.

### 6. Routing Forms of DC bus bars LN2, LN7 in Motor Housing 510

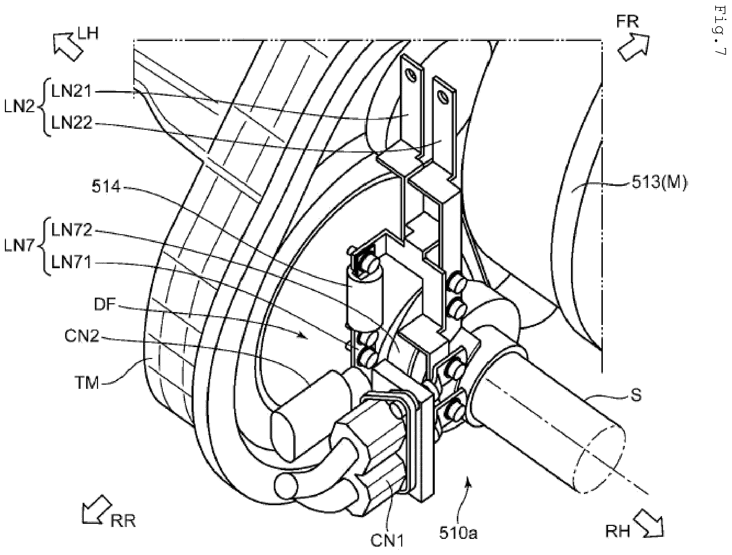

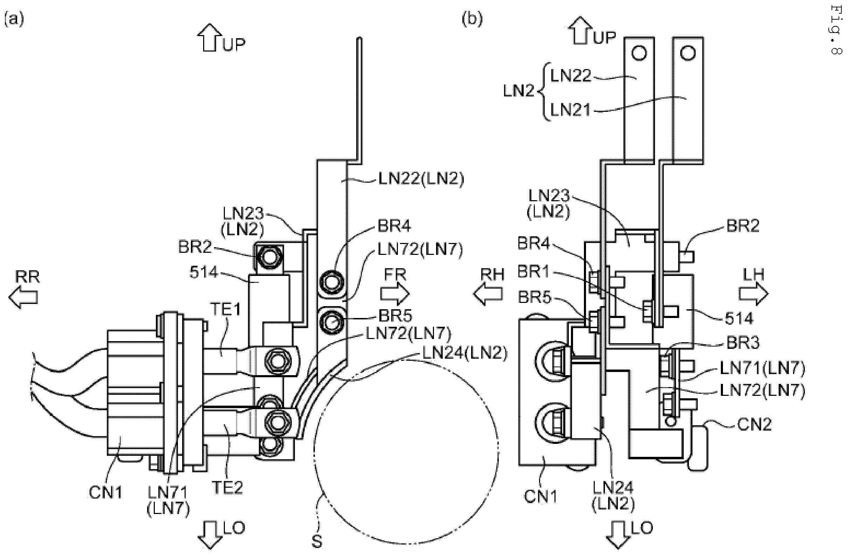

A description will be made on routing forms of the DC bus bars LN2, LN7 in an internal space 510a of the motor housing 510 with reference to FIGs. 7, 8A, and 8B.

As described above, the DC connector CN1, to which the power line harness LN1 is connected, is disposed in the rear wall portion 511a of the first motor housing 511, and the DC connector CN2, to which the auxiliary machine wire harness LN3 is connected, is disposed in the rear wall portion 512b of the second motor housing 512. In addition, in the motor housing 510, the DC bus bars LN2, each of which protrude upward from the opening of the recessed portion 512a, are routed.

As illustrated in FIGs. 7, 8A, and 8B, in the internal space 510a of the motor housing 510, the DC bus bar LN7, which is branched from the DC bus bar LN2 and connected to the DC connector CN2, is also routed. In addition, in the internal space 510a of the motor housing 510, a fuse 514 that is inserted in the DC bus bar LN7 is accommodated.

Here, as illustrated in FIG. 7, in the internal space 510a of the motor housing 510, the differential gear DF partially protrudes in a truncated cone shape from the transmission TM side. In addition, the driveshaft S extends rightward from the differential gear DF. In the internal space 510a of the motor housing 510, the DC bus bars LN2, LN7 are arranged so as not to interfere with the protruding portion of the differential gear DF and the driveshaft S.

The DC bus bar LN2 for connecting between the inverter 100 and the DC connector CN1 includes DC bus bars LN21 to LN24. The DC bus bar LN7, which is branched from the DC bus bar LN2 and connected to the DC connector CN2, includes DC bus bars LN71, LN72.

The DC bus bar LN21 and the DC bus bar LN22 are wires, each of which has a portion protruding upward from the opening of the recessed portion 512a. A lower end portion (connection point BR1) of the DC bus bar LN21 is connected to the DC bus bar LN23. As illustrated in FIG. 8B, the DC bus bar LN23 substantially has a U-shape in a front view. One end of the DC bus bar LN23 is connected to the DC connector CN1 via a terminal TE1. An upper portion (connection point BR2) of the DC bus bar LN23 is connected to the fuse 514. Of the plural bus bars LN21 to LN24 that constitute a DC bus bar 2, the DC bus bars LN21, LN23 are bus bars having one of electrodes (one of the positive electrode and the negative electrode).

The DC bus bar LN71 that extends downward from the fuse 514 is connected to the fuse 514 at a connection point BR3. The DC bus bar LN71 is a bus bar having one of the electrodes (one of the positive electrode and the negative electrode) of the paired bus bars, which constitute the DC bus bar LN7. A lower end portion of the DC bus bar LN71 is connected to the DC connector CN2.

A lower end portion (connection point BR4) of the DC bus bar LN22 is connected to the DC bus bar LN72. A lower end portion of the DC bus bar LN72 is connected to the DC connector CN2. The DC bus bar LN72 is a bus bar having the other of the electrodes (the other of the positive electrode and the negative electrode) of the paired bus bars, which constitute the DC bus bar LN7.

The DC bus bar LN24 is connected to the DC bus bar LN72 at a connection point BR5 that is located below the connection point BR4. The DC bus bar LN24 is connected to the DC connector CN1 via a terminal TE2. Of the plural bus bars LN21 to LN24 that constitute the DC bus bar 2, the DC bus bars LN22, LN24 are bus bars having the other of the electrodes (the other of the positive electrode and the negative electrode).

Here, as illustrated in FIG. 8A, each of the DC bus bar LN24 and the DC bus bar LN72 has an arc shape. That is, the DC bus bar LN24 and the DC bus bar LN72 are arcuate portions, each of which avoids interference between the conductive member and each of the differential gear DF (not illustrated in FIG. 8A), the driveshaft S, and peripheral wall portions thereof.

A reason why each of the DC bus bar LN24 and the DC bus bar LN72 is formed to have the arc shape is to avoid the interference with the differential gear DF, which protrudes in the internal space 510a of the motor housing 510, and the driveshaft S, which is inserted into the internal space 510a. That is, in the internal space 510a of the motor housing 510, the DC bus bars LN21 to LN24, LN71, LN72 are routed while avoiding the interference with the differential gear DF and the driveshaft S.

### 7. Effects

In the structure adopted for the powertrain PT of the vehicle V according to an embodiment, the DC bus bar (conductive member) LN2, which connects between the DC connector (power supply connection portion) CN1 and the smoothing unit (circuit section) 107 of the inverter (power converter) 100, is routed in the internal space 510a of the motor housing (drive system housing) 510. Thus, the DC bus bar LN2 is protected by the motor housing 510 even during the vehicle collision. As a result, the damage to the DC bus bar LN2 is prevented even during the vehicle collision and the like. Accordingly, compared to a case where the conductive member such as the DC bus bar LN2 is provided outside the motor housing 510, there is no need to secure a space for allowing displacement of the conductive member or a space for arranging a protector for the conductive member in order to prevent the damage to the conductive member, which is caused by the collision with the peripheral member or the vehicle body.

In the structure adopted for the powertrain PT of the vehicle V according to an embodiment, in the inverter housing 101, the ferrite core (noise filter component) 1061 is inserted in the DC bus bar (circuit wire) LN4, and the Y capacitor 1062 is connected thereto. Thus, it is possible to prevent leakage of noise generated in the power module unit 108 of the inverter 100 or the like to the DC connector CN1 side of the portion of the DC bus bar LN4, in which the ferrite core 1061 is inserted, and to the power line harness LN1 connected to the DC connector CN1 (an EMI measure). In addition, also in the case where noise from another device is transmitted to (superimposed on) the power line harness LN1, interference of the noise with driving of the inverter 100 is prevented (an EMS measure).

In the structure adopted for the powertrain PT of the vehicle V according to an embodiment, each of the motor housing 510 and the inverter housing 101 is made of the conductive material, and the DC bus bar LN4 and the DC bus bar LN2 are accommodated therein. Thus, it is possible to prevent the leakage of the noise to the outside of the inverter housing 101 from the smoothing unit 107 side of the portion of the DC bus bar LN4, in which the ferrite core 1061 is inserted, and to prevent entry of the noise from the outside of the motor housing 510 or the inverter housing 101 into the motor housing 510 or the inverter housing 101. In this way, the EMS measure is taken.

The motor M has the stator 513 and the rotor in the circular shapes when seen in an axial direction of the rotational shaft. For this reason, an accommodation region of the motor M in the internal space 510a of the motor housing 510 is a columnar region. In the powertrain PT of the vehicle V, in view of the shape of the accommodation region of the motor M in the internal space 510a of the motor housing 510, it is configured that the recessed portion 512a is provided in the portion that does not interfere with the accommodation region of the motor M and that the downward protruding portion 102a of the inverter housing 101 (housing body portion 102) enters the recessed portion 512a. In this way, in the structure adopted for the powertrain PT of the vehicle V, it is possible to suppress enlargement of the motor housing 510 and the inverter housing 101 and to thereby suppress the damage to the powertrain PT and the peripheral portions thereof during the vehicle collision. In addition, by suppressing the enlargement of the motor housing 510 and the inverter housing 101, it is possible to secure a high degree of freedom in design of the vehicle V.

In the structure adopted for the powertrain PT of the vehicle V according to an embodiment, the DC bus bar LN24, which constitutes the DC bus bar LN2, has the arcuate portion. Thus, it is possible to suppress the clearance between the DC bus bar LN2 and each of the differential gear DF and the driveshaft S as small as possible while avoiding the interference between the DC bus bar LN2 and each of the differential gear DF, the driveshaft S, and the peripheral wall portions thereof. Accordingly, in the powertrain PT of the vehicle V, it is possible to suppress the enlargement of the motor housing 510 and to secure the high degree of freedom in the design while suppressing the damage to the motor housing 510 and the peripheral portions during the vehicle collision.

In the structure adopted for the powertrain PT of the vehicle V according to an embodiment, a tube axis of the ferrite core 1061 is arranged in the up-down direction. In this way, it is possible to suppress the portion (downward protruding portion 102a) of the inverter housing 101, in which the ferrite core 1061 is accommodated, from bulging in the front-rear direction and the vehicle width direction. Accordingly, in the plan view of the inverter housing 101 and the motor housing 510, it is possible to prevent the inverter housing 101 from protruding from an outer shape line of the motor housing 510. Thus, also during the vehicle collision, it is possible to suppress the damage to the inserted portion LN41, which is inserted in the tube of the ferrite core 1061, in the DC bus bar LN4, which is advantageous to ensure the high safety.

In the structure adopted for the powertrain PT of the vehicle V according to an embodiment, the connection points PT1, PT2 between the inserted portion LN41 and the extending portion LNN42 of the DC bus bar LN4 are arranged above the ferrite core 1061. Thus, compared to a case where the connection points PT1, PT2 between the inserted portion LN41 and the extending portion LN42 of the DC bus bar LN4 are arranged at a position (on the outside) shifted from the region above the ferrite core 1061 in the front-rear direction or the vehicle width direction, in the powertrain PT of the vehicle V, it is possible to prevent the enlargement of the inverter housing 101 in the front-rear direction and the vehicle width direction. Accordingly, it is possible to suppress the portion (downward protruding portion 102a) of the inverter housing 101, in which the ferrite core 1061 is accommodated, from bulging in the front-rear direction and the vehicle width direction, and it is thus possible to suppress the damage to the inverter housing 101 during the vehicle collision.

In the structure adopted for the powertrain PT of the vehicle V according to an embodiment, the drive system, which includes the motor M, and the inverter 100 are mounted in the powertrain room R1 which is provided in front of the vehicle V, and the DC connector CN1 is disposed in the rear wall portion 511a of the first motor housing 511 in the motor housing 510. Accordingly, even in the case where a frontal collision of the vehicle V occurs, and an obstacle enters the portion of the powertrain room R1, in which the motor M and the inverter 100 are arranged, in the powertrain PT of the vehicle V, it is possible to suppress the damage to the DC connector CN1, which is caused by the obstacle or the member, which is pushed by the obstacle and moves rearward, in the vehicle V, or the like. That is, the motor housing 510, which accommodates the motor M, has relatively high rigidity, and thus functions as a protection member that protects the DC connector CN1 during the frontal collision.

In the structure adopted for the powertrain PT of the vehicle V according to an embodiment, the DC bus bar (auxiliary machine wire) LN7, which is branched from the DC bus bar LN2, is accommodated in the internal space 510a of the motor housing 510. Thus, the DC bus bar LN7 is also protected during the vehicle collision. Accordingly, such a structure is advantageous to ensure the high safety during the vehicle collision while allowing the power supply to the electric compressor (auxiliary machine) C by the DC bus bar LN7, which is branched from the DC bus bar LN2.

As it has been described so far, the structure adopted for the powertrain PT of the vehicle V according to an embodiment can ensure the safety during the vehicle collision.

### [Modified Examples]

In an embodiment, the configuration that the motor housing 510 and the inverter housing 101 are separate components and are tightly joined to each other is adopted. However, in the invention, it is also possible to adopt a configuration that the drive system housing including the motor housing 510 and the inverter housing 101 are integrated. That is, in the invention, a configuration may be adopted that the converter housing and the drive system housing are not provided as the separate components, that a part of the drive system housing has an outwardly bulging portion, and that the component (circuit section) of the power converter is accommodated in the bulging portion. In this case, it is not necessary that the circuit section of the power converter is densely arranged in the space inside the drive system housing, and the circuit section may be arranged separately in the space inside the housing.

In an embodiment, the inverter 100 is adopted as the example of the power converter. However, in the invention, it is also possible to adopt a device other than the inverter as the power converter. For example, a DC/DC converter may be adopted as the power converter.

In an embodiment, the bus bar LN2 is adopted as the conductive member that connects the inverter 100 and the DC connector CN1. For example, a coated wire can also be adopted.

In an embodiment, the DC connector CN1 is adopted as a connection destination of the power line harness LN1. For example, terminals may be connected to a tip portion of the power line harness and a tip portion of the conductive member, and the terminals may be joined to each other by a bolt, a nut, or the like.

In an embodiment, the configuration is adopted that the differential gear DF protrudes in the internal space 510a of the motor housing 510 and the driveshaft S passes therethrough. The differential gear may not protrude toward the motor housing 510 side, and the driveshaft may not pass through the internal space 510a.

In anembodiment, the configuration is adopted that the battery 200 is mounted under the floor of the cabin R2. For example, the battery may be mounted in the powertrain room, or the battery may be mounted under a floor of a baggage compartment behind the cabin.

In an embodiment, the configuration is adopted that each of the motor housing 510 and the inverter housing 101 is formed of the conductive material. For example, the housing itself may be made of a non-conductive material, and a periphery thereof may be electromagnetically shielded.

In an embodiment, the ferrite core 1061 and the Y capacitor 1062 are adopted as the examples of the noise filter component. However, in the invention, it is also possible to adopt a noise filter component other than the ferrite core. For example, a choke coil or the like can be adopted as the noise filter component.

In an embodiment, the recessed portion 512a is provided in the motor housing 510, and the downward protruding portion 102a is provided in the inverter housing 101.

In an embodiment, the electric compressor C of the air conditioner is adopted as the example of the auxiliary machine. For example, a refrigerant pump that circulates a refrigerant for cooling the powertrain PT can also be adopted as the auxiliary machine.

In an embodiment, the connection points PT1, PT2 between the inserted portion LN41 and the extending portion LN42 of the DC bus bar LN4 are arranged above the ferrite core 1061. However, it is also possible to arrange the connection point between the inserted portion and the extending portion at a position on the outer side that is shifted from the position above the ferrite core in the front-rear direction or the vehicle width direction.

In an embodiment, in regard to the inserted portion LN41 of the DC bus bar LN4, both of the positive and negative bus bars are coated with the resin mold 1063.

In an embodiment, the powertrain PT includes the engine E. However, the powertrain does not always have to include the engine in the invention. That is, in the invention, it is also possible to adopt the structure of the powertrain PT described above for an electric vehicle (BEV) that only includes the motor as the drive source for travel of the vehicle.

### [Reference Signs List]

100: inverter (power converter)
101: inverter housing (converter housing)
102a: downward protruding portion
106: DC input/output unit
107: smoothing unit (circuit section)
108: power module unit (circuit section)
200: battery
510: motor housing (drive system housing)
510a: recessed portion
510b: rear wall portion (peripheral wall portion)
514: fuse
1061: ferrite core (noise filter component)
1062: Y capacitor (noise filter component)
BR1, BR2: branch portion
C: electric compressor (auxiliary machine)
CN1: DC connector (power supply connection portion)
CN2: DC connector DF: differential gear
LN1: power line harness
LN2: DC bus bar (conductive member)
LN3: auxiliary machine wire harness
LN4: DC bus bar (circuit wire)
LN7: conductive member
LN71: bus bar
LN72: bus bar
S: driveshaft (output shaft)
PT: powertrain

## Claims

1. A vehicle powertrain structure comprising:
a drive system for mounting on a vehicle and has a motor as a drive source for travel of the vehicle and a drive system housing (510) at least accommodating the motor;
a battery (200) as a power source of the motor; and
a power converter (100) that is to be mounted on the vehicle and has a circuit section for power conversion between the motor and the battery (200) and a converter housing (101) accommodating the circuit section, wherein
the converter housing (101) is closely and/or directly joined to the drive system housing (510) or integrally provided with the drive system housing (510),
a power supply connection portion (CN1), to which a wire extending from the battery (200) is connected, is disposed in or on a peripheral wall portion of the drive system housing (510); and
a conductive member (LN2) that connects between the power supply connection portion (CN1) and the circuit section is routed in the drive system housing (510).

2. The vehicle powertrain structure according to claim 1, wherein
the converter housing (101) is separately provided from the drive system housing (510),
each of the drive system housing (510) and the converter housing (101) is formed by using a conductive and/or electromagnetically shielding material, and
the circuit section has a circuit wire (LN4) that extends from a connection portion with the conductive member (LN2) and has a noise filter component (1061) that is inserted in the circuit wire.

3. The vehicle powertrain structure according to claim 1 or 2, wherein
the converter housing (101) is placed on the drive system housing (510) and has a downward protruding portion (102a) that is formed to protrude toward the drive system housing (510) located below,
the drive system housing (510) has a recessed portion that the downward protruding portion (102a) enters,
the circuit wire (LN4) in the circuit section (107) is accommodated in the downward protruding portion (102a), and
the conductive member (LN2) is formed to extend downward from the recessed portion (512a).

4. The vehicle powertrain structure according to any one of claims 1-3, wherein
a differential gear (DF) is accommodated in the drive system housing (510), the differential gear (DF) being connected to an output shaft (S) that transmits a driving force for travel to wheels, and
the conductive member (LN2) has an arcuate portion that is provided to surround a periphery of the differential gear (DF) and/or the drive shaft (S).

5. The vehicle powertrain structure according to claim 3 or 4, wherein
the noise filter component (1061) at least includes a ferrite core in a tubular shape, and
in a state where a tube axis is along an up-down direction, the ferrite core is accommodated in the downward protruding portion.

6. The vehicle powertrain structure according to claim 5, wherein
the circuit wire (LN4) has: an inserted portion that is inserted through a tubular opening of the ferrite core; and an extending portion that is connected to the inserted portion and extends in an opposite direction from a connection portion with the conductive member (LN2) with the ferrite core being interposed therebetween, and
the inserted portion and the extending portion are connected to each other at a position above the ferrite core.

7. The vehicle powertrain structure according to any one of claim 1 to claim 6, wherein
the drive system and the power converter (100) are configured to be mounted in a front portion of the vehicle, and
the power supply connection portion (CN1) is disposed in a rear wall portion, which is disposed behind the motor, in the drive system housing (510).

8. The vehicle powertrain structure according to any one of claim 1 to claim 7, wherein
an auxiliary machine that is actuated by power from the battery (200) is to be mounted on the vehicle, and
in the drive system housing (510), a portion of an auxiliary machine wire (LN3) that is branched from the conductive member (LN2) and connects between the power supply connection portion (CN1) and the auxiliary machine is accommodated.

9. The vehicle powertrain structure according to claim 8, wherein the auxiliary machine is an electric compressor (C) of an air conditioner and/or a refrigerant pump for circulating a refrigerant for cooling a powertrain (PT).

10. The vehicle powertrain structure according to any one of claim 1 to claim 9, wherein an auxiliary machine wire harness (LN3) extending outside the drive system housing (510) is connected to the DC connector (CN2) disposed in or on a peripheral wall of the drive system housing (510).

11. The vehicle powertrain structure according to any one of claim 1 to claim 10, wherein the conductive member (LN2) is connected to the DC connector (CN2) over a conductive member (LN7), which is branched from the conductive member (LN2).

12. The vehicle powertrain structure according to claim 11, wherein the conductive member (LN7) includes bus bars (LN71, LN72), wherein the bus bar (LN71) is connected to a fuse (514).

13. The vehicle powertrain structure according to claim 12, wherein the bus bar (LN72) has an arc shape.

14. The vehicle powertrain structure according to any one of claim 1 to claim 14, wherein the converter housing (101) is provided with a refrigerant circulation path for cooling components of the converter (100).

15. A vehicle comprising a vehicle powertrain structure as defined in any of the preceding claims.
